# EUROPEAN PATENT SPECIFICATION

(11) **EP 0 369 799 B1**
(45) Date of publication and mention of the grant of the patent: **09.02.1994**
(21) Application number: 89311900.8
(22) Date of filing: 16.11.1989
(51) Int. Cl.: B60J 10/06

(54) **Magnetic window seal assembly**
Magnetische Fensterscheibendichtung
Dispositif d'étanchéité de fenêtre magnétique

(30) Priority: 16.11.1988 US 272484
(43) Date of publication of application: 23.05.1990
(73) Proprietor: THE STANDARD PRODUCTS COMPANY, Cleveland Ohio 44102 (US)
(72) Inventor: Keys, James Frederick, Port Clinton Ohio 43452 (US); Gustafson, Thomas Lloyd, Southfield Michigan 48076 (US)
(74) Representative: Jones, Michael Raymond

(56) References cited:
- FR-A- 2 555 650
- US-A- 4 535 563
- PATENT ABSTRACTS OF JAPAN vol. 10, no. 92 (M-468)(2149) 09 April 1986,& JP-A-60 229841 (TOYODA GOSEI) 15 November 1985,

## Description

The present invention relates to a frameless window assembly using a magnetic seal and having a movable windowpane capable of having all edges flush with the adjacent vehicle body panel.

In recent years there has been much interest in aerodynamically designed automotive vehicles having windowpanes with all edges substantially flush (hereinafter referred to as "full flush") with the vehicle body. One such system is described in our copending European patent application No. 89311899.2 (EP-A-0 369 798). Full flush window systems, however, pose unique problems with respect to windowpane movement. For example, since a full flush windowpane is flush with the vehicle body at the beltline, opening of the window requires lateral or transverse inward movement of the windowpane at the beltline prior to its descent into the tracking channel in the vehicle door. Conventional framed automotive windows do not permit such lateral or transverse movement of the windowpane. Although elimination of window framework to allow for such movement would circumvent this problem, it is difficult to achieve a satisfactory window seal in frameless systems using conventional sealing techniques.

For example, automotive windows are conventionally sealed using elastomeric strips which depend primarily upon compression for their sealing force. In frameless window systems, the use of conventional sealing strips generally requires higher compression to form an adequate seal, making it difficult to open and close the windows of the vehicle. Moreover, repeated compression of a sealing strip, particularly one requiring high compressive force for sealing, shortens the effective sealing life of the strip. If less compression of the strip is used to offset these problems, the integrity of the seal between the windowpane and vehicle body is reduced. This leads to increased windowpane flutter, wind noise and air entering the passenger compartment during operation of the vehicle.

One alternative to compression-dependent sealing involves the use of magnetic elements in the sealing arrangement. Conventional magnetic seals such as that proposed in US-4535563, do not, however, offer an adequate solution to the sealing problems encountered in full flush or frameless window systems. For example, in frameless systems the windowpane is sealed directly to the automotive body and opening of the vehicle door requires breaking the seal between the windowpane and the vehicle. If the windowpane is sealed to the body using a conventional magnetic sealing arrangement, opening the vehicle door is difficult since the magnetic seal must be broken at all points simultaneously. In addition, in full flush window systems having lateral or transverse windowpane movement at the beltline, conventional magnetic sealing assemblies offer undue resistance to such movement. The resistance can be so great as to prevent use of a conventional camming mechanism for lateral or transverse windowpane movement.

Thus, it would be desirable to provide a full flush or a frameless window assembly having a satisfactory seal between the window and the automotive body. It would also be desirable to provide a window assembly in which the sealing force is not entirely dependent upon the compression of the sealing member. It would further be desirable to provide a satisfactory window assembly including a window which is opened and closed by a camming mechanism, in which the sealing member does not offer undue compressive resistance to lateral or transverse movement of the windowpane at the beltline. It would also be desirable to provide a magnetic window assembly in a frameless system in which the door can be easily opened with the windowpane in the ascended, i.e. window opening closed, position.

US-4535563, noted above, discloses a window assembly having the features of the precharacterizing portion of claim 1.

According to the present invention, there is provided a window assembly in an automotive vehicle, comprising:-
(a) a frameless movable windowpane,
(b) a window opening, which opening is defined by adjacent body panels of the vehicle and which is opened and closed by the windowpane, and
(c) a seal assembly, serving for sealing the windowpane, when in the closed position, with the edges of the windowpane flush with said adjacent body panels of the vehicle,
   said seal assembly comprising:-
   (i) an elongate flexible sealing strip having a first end and a second end, and comprising a compressible body portion, and a mounting portion for attaching said sealing strip either to one of said adjacent body panels of the vehicle or to an edge portion of said windowpane;
   (ii) a first magnetic element attached to said body portion; and
   (iii) a second magnetic element attached either to said edge portion of said windowpane or to said one of said adjacent body panels of the vehicle, whichever is not occupied by said mounting portion;
the window assembly being characterised in that:-
said body portion of said sealing strip of the seal assembly is an elongated tubular hollow portion which is compressible laterally,
and in that:-
with the windowpane in a closed position, the edges of the windowpane being flush with said adjacent body panels of the vehicle and said window seal assembly being in operative sealing engagement with said windowpane, said body portion has a tapered configuration, said compressible body portion decreasing in width from said first end of the sealing strip to said second end of the sealing strip.

In one embodiment:-
said mounting portion of the seal assembly is mounted on said vehicle and said second magnetic element is associated with, or forms part of, an edge portion of the windowpane.

In another embodiment:-
said mounting portion of the seal assembly is mounted on an edge portion of the windowpane and said second magnetic element is associated with, or forms part of, the vehicle.

In a preferred embodiment:-
said compressible body portion of the seal assembly includes a common wall, an outer wall and side walls extending therebetween, said walls defining a hollow interior of said body portion;
said mounting portion of the seal assembly, for attaching said sealing strip to said one of said adjacent body panels of the vehicle, extends from and shares said common wall with said body portion;
said first magnetic element of the seal assembly is embedded in said outer wall of said body portion; and
said second magnetic element of the seal assembly complementary to said first magnetic element, is attached to a lateral edge of said windowpane for cooperative engagement with said first magnetic element.

In a preferred embodiment:-
in the seal assembly said side walls are bellowed,
and:-
with the windowpane in a closed position, said sealing strip is compressively tapered by selective compression of said body portion along the length of said sealing strip, causing at least a portion of said bellowed side walls to compress in an accordion-like fashion.

In a preferred embodiment:-
said windowpane is located between the beltline and roofline of said vehicle and forward of the B-pillar of said vehicle,
and:-
said mounting portion of the seal assembly is a U-shaped mounting portion, for attaching said sealing strip to said adjacent side panels of the vehicle, said U-shaped mounting portion defining a U-shaped channel and said mounting portion including gripping ribs extending into said U-shaped channel;
and:-
said U-shaped mounting portion of the seal assembly is mounted on a lateral edge of said B pillar adjacent to said lateral edge of said windowpane,
and:-
said sealing strip of the sealing assembly is compressively tapered when in sealing engagement with said adjacent body panels of the vehicle and said windowpane, said sealing strip being less compressed at the beltline relative to the roofline of the vehicle.

The present invention will be understood from the following description of the preferred embodiments taken in conjunction with the drawings in which:
Figure 1 is a partial side view of an automotive vehicle having a frameless window system with a movable windowpane shown in the fully ascended position;
Figure 2 is a cross-sectional view, broken away, taken along line 2-2 of Figure 1, illustrating a preferred embodiment of the magnetic window seal assembly used in the present invention;
Figure 3 is a cross-sectional view of a alternative preferred embodiment of the second magnetic element used in the present invention;
Figure 4 is a cross-sectional view, broken away, similar to Figure 2, but showing an alternative preferred embodiment of the magnetic window seal assembly used in the present invention;
Figure 5 is a cross-sectional view taken along the line 5-5 of Figure 1, illustrating the tapering of the sealing strip of Figure 2 when in sealing engagement with windowpane and B pillar; and
Figures 6-8 are schematic representations of the lateral or transverse movement of a fully flush windowpane at its beltline edge and its descent into a vehicle door.

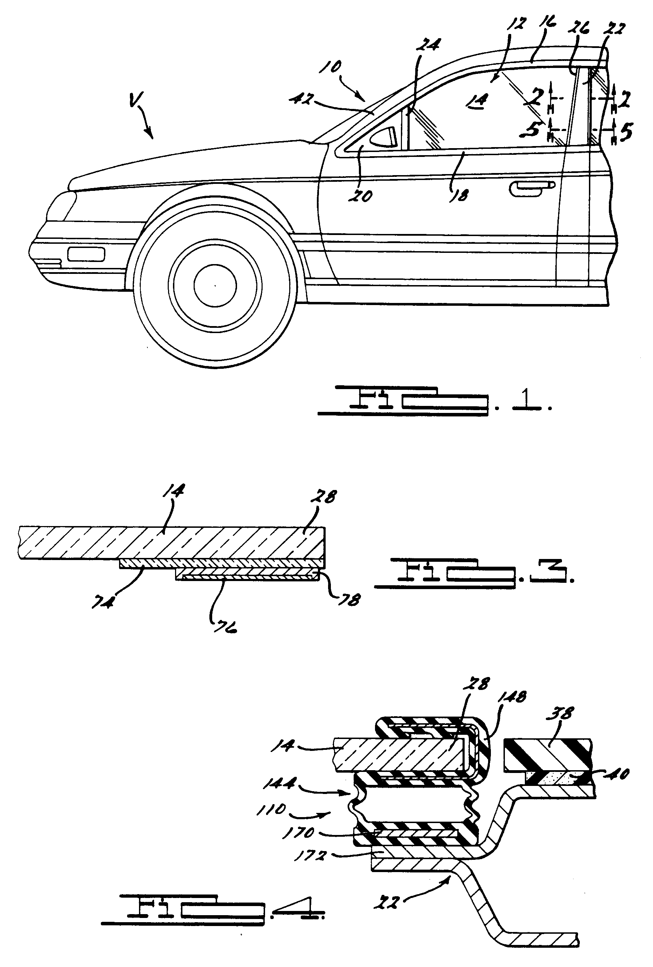

Referring first to Figure 1, an automotive vehicle V with a frameless window system denoted generally by the numeral 10 is shown. Automotive vehicle V has a window opening 12 for a side windowpane 14. Window opening 12 is generally defined by roofline 16, beltline 18, mirror panel 20, and B pillar 22, with mirror panel 20 and B pillar 22 respectively defining the forward 24 and rearward 26 tracking lines for windowpane movement. When side windowpane 14 is in an ascended position, i.e. window opening closed, window seal assembly 10 sealingly engages the lateral edge portions of windowpane 14 adjacent to mirror panel 20 and B pillar 22.

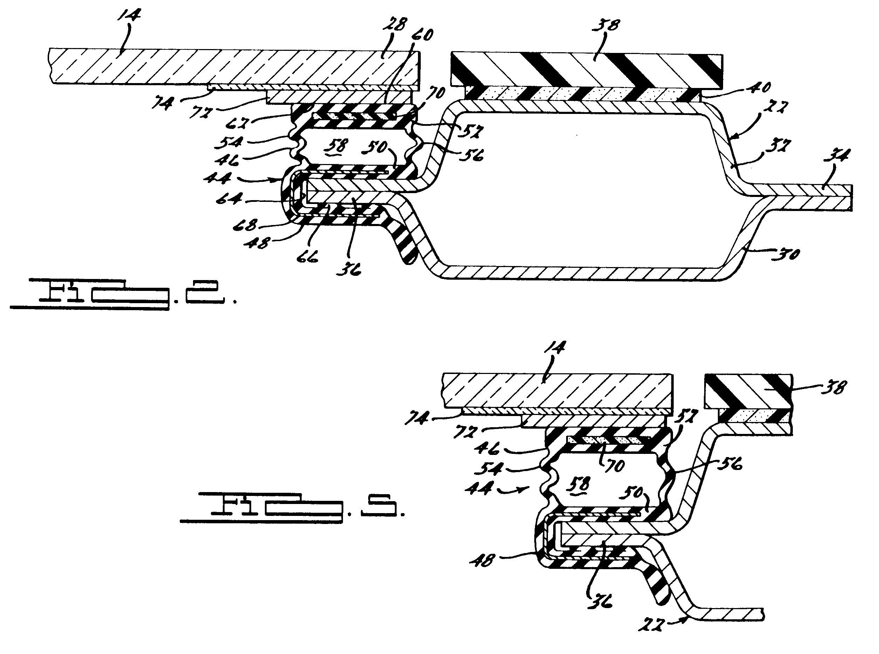

Turning now to Figure 2, which is a partial cross-section taken along the line 2-2 of Figure 1, window seal assembly 10 used in the present invention is shown engaging lateral edge portion 28 of windowpane 14 and B pillar 22. As shown in Figure 2, B pillar 22 generally comprises inner sheet metal 30 and outer sheet metal 32 pinch-welded together to form pillar flanges 34 and 36. A decorative applique 38 of glass or plastic or the like can be attached to the outer surface of B pillar 22 by conventional means such as an adhesive 40 or double-sided adhesive tape.

Mirror panel 20 also generally comprises two sheets of metal pinch-welded together to form a panel flange (not shown in the Figures), generally extending along forward tracking line 24, which provides a point of attachment for window seal assembly 10, similar to B pillar flange 36 described below. Thus, although window seal assembly 10 is described below in relation to lateral edge 28 of windowpane 14 and flange 36 of B pillar 22, it should be understood that a similar arrangement of window seal assembly 10 is provided between the flange of mirror panel 20 and the lateral edge portion of windowpane 14 proximate thereto. It should also be appreciated that in vehicles lacking a mirror panel, the window seal assembly can instead directly engage the A pillar 42 of the vehicle. Alternatively, any panel, pillar or the like providing a forward tracking line for windowpane and a suitable point of attachment for windowpane seal assembly as described below can be utilized.

As shown in Figure 2, window seal assembly 10 comprises a flexible sealing strip 44 which, in the section shown in Figure 2, is mounted on flange 36 of B pillar 22. Sealing strip 44 comprises a generally tubular body portion 46 and a U-shaped mounting portion 48 extending from and sharing common wall 50 with body portion 46. As shown in Figure 2, common and outer walls 50, 52 and side walls 54, 56 cooperate to define a hollow body interior 58 which extends at least substantially the entire length of sealing strip 44. The hollow tubular structure and side wall bellows of body portion 46 permit variable compression and expansion of body portion 46 of sealing strip 44 by an "accordian-like" action.

Sealing strip 44 can be constructed of a conventional elastomeric material suitable for use in the sealing strip art. Suitable materials include polyvinyl chloride, natural or synthetic rubber, or the like. Preferably sealing strip 44 is comprised of rubber. Outer wall 52 of sealing strip 44 can also include a friction-reducing coating on its outer surface 60 to facilitate sliding of windowpane 14 into its ascended or descended positions. Alternatively, a friction-reducing coating can be provided on the opposing surface 62 of the second magnetic element 72 (to be described below), or on both surfaces 60 and 62. Suitable coating materials including low-friction coatings such as teflon, polyurethane and silicon, or flocking comprised of nylon or polyester.

As further shown in Figure 2, U-shaped mounting portion 48 of sealing strip 44 defines a U-shaped channel 64 for mounting sealing strip 44 onto flange 36 of B pillar 22. U-shaped mounting portion 48 is also provided with one or more gripping ribs 66 extending into U-shaped channel 64 which help maintain sealing strip 44 in position on flange 36. It is also preferred that sealing strip 44 be provided with a metal core element 68, as is conventional in the art, for additional structural and gripping strength.

As shown in Figure 2, sealing strip 44 further comprises a first magnetic element 70 embedded in outer wall 52 of body portion 46. Magnetic element 70 generally comprises either a permanent magnet or a ferrous material such as iron or steel. Although first magnetic element 70 may be in the form of a strip, particles, powder or the like, magnetic element 70 is preferably provided in the form of a strip which extends substantially the length of sealing strip 44. Most preferred are flexible elastomeric magnets such as those commonly used in refrigerator seals and which can be coextruded with sealing strip 44.

Referring again to Figure 2, window seal assembly 10 further comprises a second magnetic element 72 complementary to first magnetic element 70, mounted onto lateral edge portion 28 of side windowpane 14. Windowpane 14 is preferably provided with a ceramic layer 74 to which second magnetic element 72 is adhesively attached. Second magnetic element 72 also comprises a permanent magnet or a ferrous material as described with respect to first magnetic element 70.

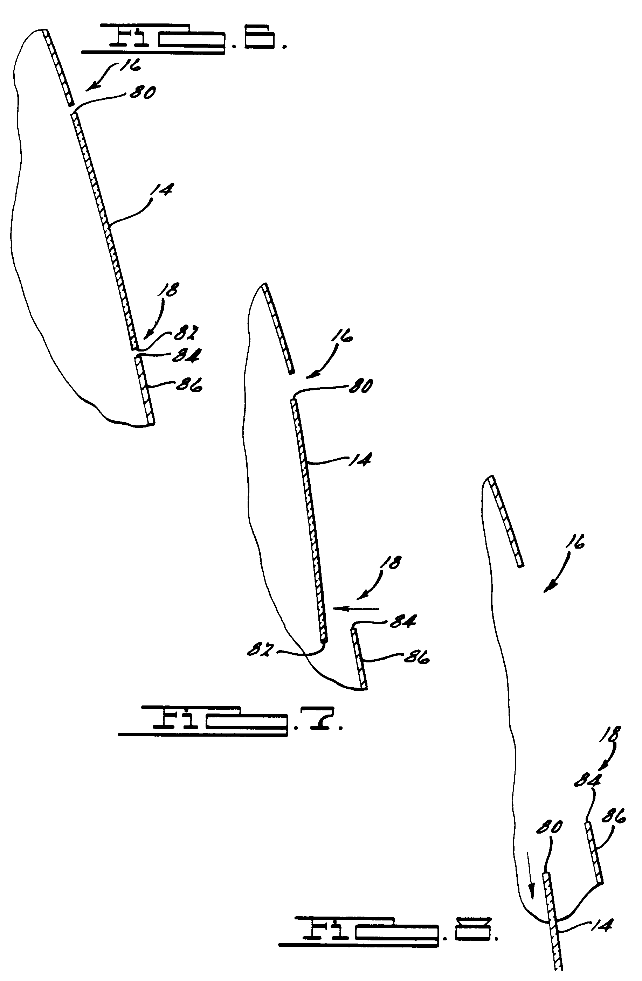

An alternative embodiment of second magnetic element 76 mounted on edge portion 28 of windowpane 14 is depicted in Figure 3. In Figure 3, second magnetic element 76 is provided with a nonmagnetic rim 78 which is in turn attached or adhesively bonded to ceramic layer 74. Alternatively (not shown in the Figures), the second magnetic element can be provided directly in the ceramic layer by the addition of iron powder, magnetic particles, and the like, or can be directly attached to the window without an intermediate ceramic layer.

Although it is preferred that one of the magnetic elements is a permanent magnet while the other is a ferrous metal, in accordance with the present invention both elements can be permanent magnets. In such case, care should be taken in mounting the first and second magnetic elements on the vehicle so that the magnetic flux of first and second magnetic elements be oriented in inverse directions, i.e. with opposite poles adjacent to each other so that the first and second magnetic elements will be attracted to each other. If permanent magnets with multiple pole magnetism patterns are used for magnetic elements, their orientation must be vertical such that each magnetic field is continuous for the entire length of the sealing portion strip. It should also be appreciated that, although first and second magnetic elements herein described preferably comprise combinations of permanent magnets and ferrous materials, the magnetic aspect of the window seal assembly used in the present invention can instead be provided by electromagnetic means.

Turning now to Figure 4, another preferred embodiment of the magnetic window seal assembly used in the present invention is shown and denoted generally by the numeral 110. As in the embodiment depicted in Figure 2, window seal assembly 110 also comprises a flexible sealing strip 144 with a first magnetic element 170 embedded therein. In the embodiment shown in Figure 4, however, sealing strip 144 is mounted directly on lateral edge portion 28 of side windowpane 14 by its U-shaped mounting portion 148. Second magnetic element 172 can be provided by the metal of the B pillar 22 of the vehicle body as shown in Figure 4, or, alternatively, in the form of a strip of magnetic or ferrous material (not shown in the Figures) attached thereto.

Referring now to Figures 2 and 5, cross-sections of window seal assembly 10 taken along lines 2-2 and 5-5 of Figure 1, respectively, the operation of window seal assembly used in the present invention in sealing engagement with windowpane 14 and B pillar 22 can be further understood. When in sealing engagement, body portion 46 of flexible sealing strip 44 is compressively tapered along its length. As shown by Figures 2 and 5, when in position on B pillar 22, hollow body portion 46 of sealing strip 44 is increasingly compressed and decreases in width as it ascends from beltline 18 toward roofline 16 of vehicle V. By sealing strip width is meant the distance between outer wall 52 and common wall 50 of body portion 46. It should also be appreciated that this tapering can also be obtained or enhanced by providing a structurally tapered sealing strip in which the width of bellowed side walls 54, 56, and consequently the cross-sectional area of hollow interior 58 of body portion 46, is decreased as sealing strip 44 ascends from beltline 18 toward roofline 16. The compressibility of sealing strip 44 and its tapered configuration when in sealing engagement, as discussed below in greater detail, allows for the use of a camming mechanism for movement of a full flush window and, in addition, provides for a tear-away action of the magnetic seal used in the present invention.

Turning now to the Figures 6-8, a schematic representation of the opening a full flush frameless window system by a camming mechanism is shown. Figure 6 shows windowpane 14 in an ascended or closed position. Upon opening of the window, as shown in Figure 7, windowpane 14 pivots at its transverse roofline edge 80, allowing beltline edge 82 of windowpane 14 to move laterally or transversely inwardly (hereinafter referred to as a "camming" action), toward the passenger compartment. Once beltline transverse edge 82 of windowpane 14 has moved inward sufficiently to clear the beltline edge 84 of the vehicle door 86, windowpane 14 can begin its decent into a window tracking channel (not shown in the Figures) within the door, as shown in Figure 8.

At the beginning of the camming action of movable windowpane 14, transverse roofline edge 80 of windowpane 14 must be held relatively stable in place provide a pivot point for the windowpane's inward movement at the beltline. In addition, the window sealing mechanism at the lateral edges of windowpane 14 must allow for the lateral or transverse movement of the windowpane 14 at its transverse beltline edge 82 so that the camming action for the opening of the window is not impeded. Both of these features are provided by the window seal assembly used in the present invention more fully as described below.

As described previously, due to the variable compression or tapered structure of the body portion of the sealing strip, there is a decrease in the relative compressibility of the body portion at the roofline 16. This decrease in relative compressibility of the sealing strip at the roofline stabilizes the transverse roofline edge 80 of windowpane 14 at the windowpane's uppermost lateral sealing points, creating a hinge-like effect and permitting windowpane 14 to stably pivot at the roofline 16. Although decreased compressibility of the sealing strip at the roofline 16 is desired, it is preferred that the sealing strip stop short of full compression or, if structurally tapered, short of a full taper, i.e. retaining some bellows in side walls 54, 56 at the roofline portion, in order to maintain good contact between seal surfaces.

With respect to lateral or transverse movement of windowpane 14 at the beltline 18, the relatively increased compressibility of the body portion of the sealing strip as it approaches beltline 18 results in a window seal assembly which does not offer undue compressive resistance to such movement of the windowpane's transverse beltline edge 82. Thus the camming action required for full flush window movement is not impeded by the window seal assembly used in the present invention.

A further feature of the window seal assembly used in the present invention is the tear-away action of the magnetic seal. Such tear-away action is particularly advantageous in frameless window systems in which the window is directly sealed to the automotive vehicle body and opening of the door requires the breaking of the magnetic seal. When in sealing engagement with the windowpane in the ascended position, the sealing strip used in the present invention has a tapered configuration, with the body portion being less compressed at the beltline than at the roofline. Upon opening of the door, the seal will naturally first break-away from beltline portion, and tear or peel away from the beltline to the roofline, allowing the door to be opened with ease. This offers an advantage over conventional magnetic seals utilizing sealing members which are uniformly configured in sealing engagement, since the require breaking of the magnetic seal at all points simultaneously. When the window is partially descended, the tear-away action is less pronounced but is offset by the decrease in length of engagement of the magnetic seal.

It should be understood that although the window seal assembly used in the present invention is herein described as directed toward automotive side windows located between the vehicle's roofline and beltline, the window seal assembly used in the present invention is not limited to automotive side windows. In accordance with the principles of the present invention, the window seal assembly used in the invention can be employed in a variety of vehicle window openings, wherever any of its features as described herein would be desirable. For example, the window seal assembly can be used for vehicle "moonroofs", truck windows, locomotive windows or the like.

## Claims

1. A window assembly (10, 110) in an automotive vehicle (V), comprising:-
(a) a frameless movable windowpane (14),
(b) a window opening (12), which opening is defined by adjacent body panels of the vehicle (V) and which is opened and closed by the windowpane (14), and
(c) a seal assembly (10, 110), serving for sealing the windowpane (14), when in the closed position, with the edges of the windowpane flush with said adjacent body panels of the vehicle (V),
said seal assembly (10, 110) comprising:-
(i) an elongate flexible sealing strip (44, 144) having a first end and a second end, and comprising a compressible body portion (46), and a mounting portion (48, 148) for attaching said sealing strip (44, 144) either to one of said adjacent body panels of the vehicle (V) or to an edge portion of said windowpane (14);
(ii) a first magnetic element (70, 170) attached to said body portion (46); and
(iii) a second magnetic element (72, 172) attached either to said edge portion of said windowpane (14) or to said one of said adjacent body panels of the vehicle (V), whichever is not occupied by said mounting portion (48, 148);
the window assembly being characterised in that:-
said body portion (46) of said sealing strip (44, 144) of the seal assembly (10, 110) is an elongated tubular hollow portion which is compressible laterally,
and in that:-
with the windowpane (14) in a closed position, the edges of the windowpane (14) being flush with said adjacent body panels of the vehicle (V) and said window seal assembly (10, 110) being in operative sealing engagement with said windowpane (14), said body portion (46) has a tapered configuration, said compressible body portion (46) decreasing in width from said first end of the sealing strip (44, 144) to said second end of the sealing strip (44, 144).

2. A window assembly according to claim 1, wherein said mounting portion (48) of the seal assembly (10) is mounted on said vehicle (V) and said second magnetic element (72) is associated with, or forms part of, an edge portion (28) of the windowpane (14).

3. A window assembly according to claim 1, wherein said mounting portion (148) of the seal assembly (110) is mounted on an edge portion (28) of the windowpane (14) and said second magnetic element (172) is associated with, or forms part of, the vehicle (V).

4. A window assembly according to claim 3, wherein the second magnetic element (172) of the seal assembly (110) is constituted by the vehicle (V) which is ferrous in nature.

5. A window assembly according to any one of claims 1 to 4, wherein said sealing strip (44, 144) of the seal assembly (10, 110) is structurally tapered.

6. A window assembly according to any preceding claim, wherein at least one of said magnetic elements (70, 170, 72, 172) of the seal assembly (10, 110) is a permanent magnet.

7. A window assembly according to any preceding claim, wherein at least one of said magnetic elements (70, 170, 72, 172) of the seal assembly (10, 110) is a ferrous metal.

8. A window assembly according to claim 1, wherein:-
said compressible body portion (46) of the seal assembly (10) includes a common wall (50), an outer wall (52) and side walls (54, 56) extending therebetween, said walls (50, 52, 54, 56) defining a hollow interior (58) of said body portion (46);
said mounting portion (48) of the seal assembly (10), for attaching said sealing strip (44) to said one of said adjacent body panels of the vehicle (V), extends from and shares said common wall (50) with said body portion (46);
said first magnetic element (70) of the seal assembly (10) is embedded in said outer wall (52) of said body portion (46); and
said second magnetic element (72) of the seal assembly (10, 110) complementary to said first magnetic element (70), is attached to a lateral edge (28) of said windowpane (14) for cooperative engagement with said first magnetic element (70).

9. A window assembly according to claim 8, wherein said first magnetic element (70) of the seal assembly (10) is a flexible elastomeric magnet.

10. A window assembly according to claim 8 or 9, wherein:-
in the seal assembly (10) said side walls (54, 56) are bellowed,
and wherein:-
with the windowpane (14) in a closed position, said sealing strip (44) is compressively tapered by selective compression of said body portion (46) along the length of said sealing strip (44), causing at least a portion of said bellowed side walls (54, 56) to compress in an accordion-like fashion.

11. A window assembly according to any one of claims 8 to 10, the seal assembly (10) further comprising a ceramic layer (74) on said lateral edge (28) of said windowpane (14), wherein said second magnetic element (72) is bonded to said ceramic layer (74).

12. A window assembly according to any preceding claim, wherein said sealing strip (44) of the seal assembly (10, 110) is comprised of rubber.

13. A window assembly according to claim 9, wherein said windowpane (14) is located between the beltline (18) and roofline (16) of said vehicle (V) and forward of the B-pillar (22) of said vehicle (V),
and wherein:-
said mounting portion (48) of the seal assembly (10, 110) is a U-shaped mounting portion (48), for attaching said sealing strip (44) to said adjacent side panels of the vehicle (V), said U-shaped mounting portion (48) defining a U-shaped channel (64) and said mounting portion (48) including gripping ribs (66) extending into said U-shaped channel (64);
and wherein:-
said U-shaped mounting portion (48) of the seal assembly (10, 110) is mounted on a lateral edge of said B pillar (22) adjacent to said lateral edge (28) of said windowpane (14),
and wherein:-
said sealing strip (44) of the sealing assembly is compressively tapered when in sealing engagement with said adjacent body panels of the vehicle (V) and said windowpane (14), said sealing strip (44) being less compressed at the beltline (18) relative to the roofline (16) of the vehicle (V).

14. A window assembly according to claim 13, wherein said windowpane (14) is moved by a camming mechanism.

## Patentansprüche

1. Fenstereinrichtung (10, 110) für ein Automobil (V) mit:
(a) einer rahmenlosen, bewegbaren Fensterscheibe (14),
(b) einer Fensteröffnung (12), deren Öffnung durch benachbarte Gehäuseplatten des Fahrzeuges (V) definiert ist und die durch die Fensterscheibe (14) geöffnet und geschlossen wird, und
(c) einer Dichtungseinrichtung (10, 110), die der Abdichtung der Fensterscheibe (14) dient, wenn diese in der geschlossenen Position ist, wobei die Kanten der Fensterscheibe bündig mit den benachbarten Gehäuseplatten des Fahrzeuges (V) abschließen und wobei die Dichtungseinrichtung (10, 110):
(i) einen länglichen, flexiblen Dichtungsstreifen (44, 144) aufweist, der ein erstes und ein zweites Ende hat sowie einen zusammenpreßbaren Körperabschnitt (46) und einen Befestigungsabschnitt (48, 148) für die Befestigung des Dichtungsstreifens (44, 144) entweder an einer der benachbarten Gehäuseplatten des Fahrzeuges (V) oder an einem Kantenabschnitt der Fensterscheibe (14);
(ii) ein erstes Magnetelement (70, 170), das an dem Körperabschnitt (46) befestigt ist; und
(iii) ein zweites Magnetelement (72, 172), das entweder an dem Kantenabschnitt der Fensterscheibe (14) oder an der einen benachbarten Gehäuseplatte des Fahrzeuges (V) befestigt ist und zwar daran, was nicht von dem Befestigungsabschnitt (48, 148) besetzt ist;
wobei die Fenstereinrichtung dadurch gekennzeichnet ist, daß:
der Körperabschnitt (46) des Dichtungsstreifens (44, 144) der Dichtungseinrichtung (10, 110) ein länglicher, röhrenförmiger, hohler Abschnitt ist, der seitlich zusammenpreßbar ist,
und daß:
bei geschlossener Position der Fensterscheibe (14) die Kanten der Fensterscheibe (14) bündig mit den benachbarten Gehäuseplatten des Fahrzeuges (V) sind und die Fensterdichtungseinrichtung (10, 110) in wirksamen Dichtungseingriff mit der Fensterscheibe (14) steht, der Körperabschnitt (46) eine konische Gestalt hat und der zusammenpreßbare Körperabschnitt (46) von dem ersten Ende des Dichtungsstreifens (44, 144) zu dem zweiten Ende des Dichtungsstreifens (44, 144) in der Breite abnimmt.

2. Fenstereinrichtung nach Anspruch 1, worin der Befestigungsabschnitt (48) der Dichtungseinrichtung (10) an dem Fahrzeug (V) befestigt ist und das zweite Magnetelement (72) einem Kantenabschnitt (28) der Fensterscheibe (14) zugeordnet ist oder einen Teil davon bildet.

3. Fenstereinrichtung nach Anspruch 1, worin der Befestigungsabschnitt (148) der Dichtungseinrichtung (110) an einem Kantenabschnitt (28) der Fensterscheibe (14) befestigt ist und das zweite Magnetelement (172) dem Fahrzeug (V) zugeordnet ist oder einen Teil davon bildet.

4. Fenstereinrichtung nach Anspruch 3, worin das zweite Magnetelement (172) der Dichtungseinrichtung (110) von dem Fahrzeug (V) gebildet wird, das gemäß seiner Natur eisenhaltig ist.

5. Fenstereinrichtung nach einem der Ansprüche 1 bis 4, worin der Dichtungsstreifen (44, 144) der Dichtungseinrichtung (10, 110) baulich verjüngt ist.

6. Fenstereinrichtung nach einem der vorangehenden Ansprüche, worin wenigstens ein Magnetelement (70, 170, 72, 172) der Dichtungseinrichtung (10, 110) ein Dauermagnet ist.

7. Fenstereinrichtung nach einem der vorangehenden Ansprüche, worin wenigstens ein Magnetelement (70, 170, 72, 172) der Dichtungseinrichtung (10, 110) ein Eisenmetall ist.

8. Fenstereinrichtung nach Anspruch 1, worin der zusammendrückbare Körperabschnitt (46) der Dichtungseinrichtung (10) eine gemeinsame Wand (50), eine äußere Wand (52) und sich dazwischen erstreckende Seitenwände (54, 56) aufweist, wobei die Wände (50, 52, 54, 56) einen hohlen Innenraum (58) in dem Körperabschnitt (46) definieren;
der Befestigungsabschnitt (48) der Dichtungseinrichtung (10) sich für die Befestigung des Dichtungsstreifens (44) an einer der benachbarten Gehäuseplatten des Fahrzeuges (V) von der gemeinsamen Wand (50) erstreckt und sich diese Wand mit dem Körperabschnitt (46) teilt;
das erste Magnetelement (70) der Dichtungseinrichtung (10) in der äußeren Wand (52) des Körperabschnitts (46) eingebettet ist; und
das zweite Magnetelement (72) der Dichtungseinrichtung (10, 110) komplementär zu dem ersten Magnetelement (70) ist und an einer seitlichen Kante (28) der Fensterscheibe (14) für einen zusammenwirkenden Eingriff mit dem ersten Magnetelement (70) befestigt ist.

9. Fenstereinrichtung nach Anspruch 8, worin das erste Magnetelement (70) der Dichtungseinrichtung (10) ein flexibler elastomerer Magnet ist.

10. Fenstereinrichtung nach Anspruch 8 oder 9, worin
die Seitenwände (54, 56) in der Dichtungseinrichtung (10) gefaltet sind
und worin
bei geschlossener Position der Fensterscheibe (14) der Dichtungsstreifen (44) durch die selektive Kompression des Körperabschnitts (46) entlang der Länge des Dichtungsstreifens (44) aufgrund des Zusammendrückens verjüngt vorliegt, wodurch veranlaßt wird, daß wenigstens ein Abschnitt der gefalteten Seitenwände (54, 56) sich in einer Akkordeon-ähnlichen Weise zusammendrückt.

11. Fenstereinrichtung nach einem der Ansprüche 8 bis 10, wobei die Dichtungseinrichtung (10) ferner eine keramische Schicht (74) an der seitlichen Kante (28) der Fensterscheibe (14) aufweist und das zweite Magnetelement (72) mit der keramischen Schicht (74) verbunden ist.

12. Fenstereinrichtung nach einem der vorangehenden Ansprüche, worin der Dichtungsstreifen (44) der Dichtungseinrichtung (10, 110) aus Gummi besteht.

13. Fenstereinrichtung nach Anspruch 9, worin die Fensterscheibe (14) zwischen der Gürtellinie (18) und der Dachlinie (16) des Fahrzeuges (V) und vor der B-Säule (22) des Fahrzeuges (V) angeordnet ist und worin
der Befestigungsabschnitt (48) der Dichtungseinrichtung (10, 110) ein U-förmiger Befestigungsabschnitt (48) ist, um den Dichtungsstreifen (44) an den benachbarten Seitenplatten des Fahrzeuges (V) zu befestigen, wobei der U-förmige Befestigungsabschnitt (48) einen U-förmigen Kanal (64) definiert und der Befestigungsabschnitt (48) Greifrippen (66) aufweist, die sich in den U-förmigen Kanal (64) erstrecken;
und worin
der U-förmige Befestigungsabschnitt (48) der Dichtungseinrichtung (10, 110) an einer Seitenkante der B-Säule (22) befestigt ist, die benachbart zu der Seitenkante (28) der Fensterscheibe (14) angeordnet ist;
und worin
der Dichtungsstreifen (44) der Dichtungseinrichtung aufgrund des Zusammendrückens konisch ausgebildet ist, wenn der Dichtungsstreifen in Dichtungseingriff mit den benachbarten Gehäuseplatten des Fahrzeuges (V) und der Fensterscheibe (14) steht, wobei der Dichtungsstreifen (44) an der Gürtellinie (18) weniger stark zusammengedrückt ist als an der Dachlinie (16) des Fahrzeuges (V).

14. Fenstereinrichtung nach Anspruch 13, worin die Fensterscheibe (14) durch einen Nockenmechanismus bewegt wird.

## Revendications

1. Ensemble à fenêtre (10, 110) dans un véhicule automobile (V), comprenant :
(a) une vitre de fenêtre (14) mobile sans châssis,
(b) une ouverture (12) pour fenêtre, ouverture qui est définie par des panneaux adjacents de la caisse du véhicule (V) et qui est ouverte et fermée par la vitre (14) de la fenêtre, et
(c) un ensemble à joint (10, 110) servant à rendre étanche la vitre (14) de la fenêtre lorsqu'elle est dans la position fermée, avec les bords de la vitre de la fenêtre au ras desdits panneaux adjacents de la caisse du véhicule (V), ledit ensemble à joint (10, 110) comportant :
(i) une bande d'étanchéité allongée flexible (44, 144) ayant une première extrémité et une seconde extrémité, et comportant une partie de corps compressible (46); et une partie de montage (48, 148) pour fixation de ladite bande d'étanchéité (44, 144) soit à l'un desdits panneaux adjacents de la caisse du véhicule (V), soit à une partie de bord de ladite vitre (14) de la fenêtre;
(ii) un premier élément magnétique (70, 170) fixé à ladite partie de corps (46); et
(iii) un second élément magnétique (72, 172) fixé soit à ladite partie de bord de ladite vitre (14) de la fenêtre soit audit panneau desdits panneaux adjacents de la caisse du véhicule (V), celui qui n'est pas occupé par ladite partie de montage (48, 148);
l'ensemble à fenêtre étant caractérisé en ce que :
- ladite partie de corps (46) de ladite bande d'étanchéité (44, 144) de l'ensemble à joint (10, 110) est une partie allongée tubulaire creuse qui peut être comprimée latéralement,
et en ce que :
- avec la vitre (14) de la fenêtre dans la position fermée, les bords de la vitre (14) de la fenêtre étant à ras desdits panneaux adjacents de la caisse du véhicule (V) et ledit ensemble à joint de la fenêtre (10, 110) étant en contact d'étanchéité fonctionnel avec ladite vitre (14) de la fenêtre, ladite partie de corps (46) a une configuration chanfreinée, ladite partie de corps compressible (46) diminuant en largeur entre ladite première extrémité de la bande d'étanchéité (44, 144) et ladite seconde extrémité de la bande d'étanchéité (44, 144).

2. Ensemble à fenêtre selon la revendication 1, dans lequel ladite partie de montage (48) de l'ensemble à joint (10) est montée sur ledit véhicule (V) et ledit second élément magnétique (72) est associé à une partie de bord (28) de la vitre (14) de la fenêtre, ou en constitue une partie.

3. Ensemble à fenêtre selon la revendication 1, dans lequel ladite partie de montage (148) de l'ensemble à joint (110) est montée sur une partie de bord (28) de la vitre (14) de la fenêtre, et ledit second élément magnétique (172) est associé au véhicule (V), ou en constitue une partie.

4. Ensemble à fenêtre selon la revendication 3, dans lequel le second élément magnétique (172) de l'ensemble à joint (110) est constitué par le véhicule (V) qui est ferreux par nature.

5. Ensemble à fenêtre selon l'une quelconque des revendications 1 à 4, dans lequel ladite bande d'étanchéité (44, 144) de l'ensemble à joint (10, 110) est structurellement chanfreinée.

6. Ensemble à fenêtre selon l'une quelconque des revendications précédentes, dans lequel au moins l'un desdits éléments magnétiques (70, 170, 72, 172) de l'ensemble à joint (10, 110) est un aimant permanent.

7. Ensemble à fenêtre selon l'une quelconque des revendications précédentes, dans lequel au moins l'un desdits éléments magnétiques (70, 170, 72, 172) de l'ensemble à joint (10, 110) est un métal ferreux.

8. Ensemble à fenêtre selon la revendication 1, dans lequel :
- ladite partie de corps compressible (46) de l'ensemble à joint (10) comprend une paroi commune (50), une paroi extérieure (52) et des parois latérales (54, 56) s'étendant entre celles-ci, lesdites parois (50, 52, 54, 56) définissant un intérieur creux (58) de ladite partie de corps (46);
- ladite partie de montage (48) de l'ensemble à joint (10), pour la fixation de ladite bande d'étanchéité (44) audit panneau desdits panneaux adjacents de la caisse du véhicule (V), s'étend à partir de ladite paroi commune (50), et la partage avec ladite partie de corps (46);
- ledit premier élément magnétique (70) de l'ensemble à joint (10) est encastré dans ladite paroi extérieure (52) de ladite partie de corps (46); et
- ledit second élément magnétique (72) de l'ensemble à joint (10, 110), complémentaire dudit premier élément magnétique (70), est fixé à un bord latéral (28) de ladite vitre (14) de fenêtre pour contact associé avec ledit premier élément magnétique (70).

9. Ensemble à fenêtre selon la revendication 8, dans lequel ledit premier élément magnétique (70) de l'ensemble à joint (10) est un aimant en élastomère flexible.

10. Ensemble à fenêtre selon la revendication 8 ou 9, dans lequel :
- dans l'ensemble à joint (10), lesdites parois latérales (54, 56) sont à soufflet,
et dans lequel :
- lorsque la vitre (14) de la fenêtre se trouve dans la position fermée, ladite bande d'étanchéité (14) est chanfreinée de façon compressive par suite de la compression sélective de ladite partie de corps (46) sur la longueur de ladite bande d'étanchéité (44), ayant pour effet qu'au moins une partie desdites parois latérales à soufflet (54, 56) se comprime à la façon d'un accordéon.

11. Ensemble à fenêtre selon l'une quelconque des revendications 8 à 10, l'ensemble à joint (10) comportant en outre une couche de céramique (74) sur ledit bord latéral (28) de ladite vitre (14) de la fenêtre, dans lequel ledit second élément magnétique (72) est lié à ladite couche de céramique (74).

12. Ensemble à fenêtre selon l'une quelconque des revendications précédentes, dans lequel ladite bande d'étanchéité (44) de l'ensemble à joint (10, 110) est constituée de caoutchouc.

13. Ensemble à fenêtre selon la revendication 9, dans lequel ladite vitre (14) de la fenêtre est située entre la ligne de ceinture (18) et la ligne de toit (16) dudit véhicule (Y) et à l'avant du montant B (22) dudit véhicule (V),
et dans lequel :
- ladite partie de montage (48) de l'ensemble à joint (10, 110) est une partie de montage en forme de U (48) pour la fixation de ladite bande d'étanchéité (44) auxdits panneaux latéraux adjacents du véhicule (V), ladite partie de montage en forme de U (48) définissant un canal en forme de U (64) et ladite partie de montage (48) comprenant des nervures d'accrochage (66) s'étendant dans ledit canal en forme de U (64);
et dans lequel :
- ladite partie de montage en forme de U (48) de l'ensemble à joint (10, 110) est montée sur un bord latéral dudit montant B (22) contigu audit bord latéral (28) de ladite vitre (14) de la fenêtre,
et dans lequel :
- ladite bande d'étanchéité (44) de l'ensemble d'étanchéité est chanfreinée par compression lorsqu'elle est en contact d'étanchéité avec lesdits panneaux adjacents de la caisse du véhicule (V) et ladite vitre (14) de la fenêtre, ladite bande d'étanchéité (44) étant moins comprimée au droit de la ligne de ceinture (18) par rapport à la ligne de toit (16) du véhicule (V).

14. Ensemble à fenêtre selon la revendication 13, dans lequel ladite vitre (14) de la fenêtre est déplacée par un mécanisme à effet de came.
